# EUROPEAN PATENT APPLICATION

(11) **EP 4 596 273 A1**
(43) Date of publication of application: **06.08.2025**
(21) Application number: 23870824.2
(22) Date of filing: 26.09.2023
(51) Int. Cl.: B60H 1/00

(54) **INTEGRATED MODULE AND THERMAL MANAGEMENT SYSTEM HAVING SAME, AND VEHICLE**

(30) Priority: 29.09.2022 CN 202211204938
(71) Applicant: BYD Company Limited, Shenzhen, Guangdong 518118 (CN)
(72) Inventor: LUO, Zhongliang, Shenzhen, Guangdong 518118 (CN); LI, Yuzhong, Shenzhen, Guangdong 518118 (CN); YE, Meijiao, Shenzhen, Guangdong 518118 (CN); XU, Min, Shenzhen, Guangdong 518118 (CN); TU, Juan, Shenzhen, Guangdong 518118 (CN)
(74) Representative: Mathys & Squire
(86) International application number: PCT/CN2023/121596
(87) International publication number: WO 2024/067596

(57) **Abstract**

An integrated module (1) and a thermal management system (10000) having same, and a vehicle (1000). The integrated module (1) is used for the thermal management system (10000) of the vehicle (1000), and includes a first flow channel plate (10), a second flow channel plate (20) and a heat exchanger (30), wherein the second flow channel plate (20) is fixed to the first flow channel plate (10), the heat exchanger (30) is fixed to at least one of the first flow channel plate (10) and the second flow channel plate (20), and the heat exchanger (30) is provided with a first heat exchange flow path and a second heat exchange flow path, which exchange heat with each other, two ends of the first heat exchange flow path being respectively connected to a first heat exchanger interface (15) and a second heat exchanger interface (16) of the first flow channel plate (10), and two ends of the second heat exchange flow path being respectively connected to a third heat exchanger interface (23) and a fourth heat exchanger interface (24) of the second flow channel plate (20).

## Description

### CROSS-REFERENCE TO RELATED APPLICATIONS

The present disclosure claims priority to Chinese Patent Application No. 202211204938.6 filed on September 29, 2022, entitled "INTEGRATED MODULE AND THERMAL MANAGEMENT SYSTEM HAVING SAME, AND VEHICLE", which is incorporated herein by reference in its entirety.

### FIELD

The present disclosure relates to the field of vehicles, and in particular, to an integrated module and thermal management system having same, and vehicle.

### BACKGROUND

Vehicles, such as new energy vehicles, are usually equipped with multiple systems such as heat pump systems, heat exchange systems, thermal management systems, etc., to ensure the normal operation of the vehicle; however, due to their diverse functions, these systems have numerous components and complicated connections.

### SUMMARY

The present disclosure is intended to resolve one of technical problems in the related art at least to some extent. Therefore, an object of the present disclosure is to provide an integrated module, the pipeline layout of the integrated module is more reasonable, and the overall integration degree of the integrated module is higher.

The present disclosure further provides a thermal management system having the above-mentioned integrated module.

The present disclosure further provides a vehicle having the above-mentioned thermal management system.

The integrated module according to the present disclosure is used for a thermal management system of a vehicle, includes: a first flow channel plate, a plurality of refrigerant flow paths are arranged in the first flow channel plate, the first flow channel plate is provided with a first heat exchanger interface, a second heat exchanger interface and a plurality of external device interfaces, the first heat exchanger interface, the second heat exchanger interface and the external device interfaces are respectively connected to the corresponding refrigerant flow path, and each of the external device interfaces is configurable for connecting to a component in the thermal management system of the vehicle; a second flow channel plate, the second flow channel plate is fixed to the first flow channel plate, and internal liquid cooling flow paths are arranged in the second flow channel plate, and the second flow channel plate is provided with a third heat exchanger interface, a fourth heat exchanger interface and a first water side interface, the third heat exchanger interface, the fourth heat exchanger interface and the first water side interface are respectively connected to the corresponding internal liquid cooling flow path, and the first water side interface is configurable for connecting to an external motor electronic control radiator; a heat exchanger, the heat exchanger is fixed to at least one of the first flow channel plate and the second flow channel plate, the heat exchanger is provided with a first heat exchange flow path and a second heat exchange flow path, which exchange heat with each other, two ends of the first heat exchange flow path are respectively connected to the first heat exchanger interface and the second heat exchanger interface, and two ends of the second heat exchange flow path are respectively connected to the third heat exchanger interface and the fourth heat exchanger interface.

The integrated module according to the present disclosure divides the structures on the integrated module into a refrigerant side and a liquid cooling side by setting a first flow channel plate and a second flow channel plate connected to each other. Meanwhile, the refrigerant side integrated module and the liquid cooling side integrated module exchange heat through a heat exchanger, which can reduce the overall layout space of the integrated module. The integrated module integrates the refrigerant side integrated module and the liquid cooling side integrated module, so that the thermal management system has a compact structure and a higher degree of integration, which is beneficial to the platform-based design of the whole vehicle and facilitates the integrated layout and control of the whole vehicle.

According to some examples of the present disclosure, the second flow channel plate is provided with a water tank interface connected to the internal liquid cooling flow path, and the integrated module further includes a water replenishment tank, the water replenishment tank is fixed to the second flow channel plate and connected to the water tank interface.

According to some examples of the present disclosure, the heat exchanger is located on the side of the first flow channel plate which faces away from the second flow channel plate, and the water replenishment tank is located on the side of the second flow channel plate which faces away from the first flow channel plate.

According to some examples of the present disclosure, the second flow channel plate is provided with a water pump interface connected to the internal liquid cooling flow path, and the integrated module further includes a water pump, the water pump is fixed to the second flow channel plate and connected to the water pump interface.

According to some examples of the present disclosure, the integrated module further includes: a switching valve, the switching valve is arranged on the second flow channel plate, and the switching valve is operated to allow the coolant to flow to the second heat exchange flow path or to prevent the refrigerant from flowing to the second heat exchange flow path.

According to some examples of the present disclosure, the second flow channel plate is provided with a second water side interface, the second water side interface is connected to the internal liquid cooling flow path, and the second water side interface is configurable for connecting to an external first radiator.

According to some examples of the present disclosure, the switching valve is a four-way valve, and the internal liquid cooling flow paths include: a first flow channel, the first flow channel is connected to the water pump interface and the third heat exchanger interface; a second flow channel, the second flow channel is respectively connected to the first flow channel and a first valve port of the switching valve; a third flow channel, the third flow channel is respectively connected to the fourth heat exchanger interface and a second valve port of the switching valve; a fourth flow channel, the fourth flow channel is respectively connected to a third valve port of the switching valve and the first water side interface; a fifth flow channel, the fifth flow channel is respectively connected to a fourth valve port of the switching valve and the second water side interface.

According to some examples of the present disclosure, the first water side interface and the second water side interface extend in the same direction.

According to some examples of the present disclosure, the first water side interface and the second water side interface are located at the edge of the second flow channel plate and on the side of the switching valve which is away from the water pump.

According to some examples of the present disclosure, the external device interfaces include a gas-liquid separation inlet interface; the integrated module further includes a gas-liquid separator, the gas-liquid separator is fixed to the first flow channel plate, and the inlet end of the gas-liquid separator is connected to the gas-liquid separation inlet interface.

According to some examples of the present disclosure, the gas-liquid separator and the second flow channel plate are located on the same side of the first flow channel plate.

According to some examples of the present disclosure, the external device interfaces include at least one group of heat exchange plate interfaces, each group of the heat exchange plate interfaces is connected to the two ends of the same heat exchange plate, and the heat exchange plate is configured to regulate the temperature of a battery module.

According to some examples of the present disclosure, the openings of the plurality of external device interfaces are oriented in the same direction.

According to some examples of the present disclosure, the openings of the first water side interface and the second water side interface are oriented in a first direction, and the openings of the plurality of external device interfaces are oriented in a second direction, the first direction and the second direction are opposite.

According to some examples of the present disclosure, the heat exchanger is arranged at the bottom corner of the first flow channel plate.

According to some examples of the present disclosure, mounting holes are provided on adjacent side walls of the first flow channel plate, and the mounting holes are configurable for cooperating with the body of the vehicle to fix the integrated module.

According to some examples of the present disclosure, the first flow channel plate is provided with a control valve group and a throttle valve group, the control valve group is configured to communicate different refrigerant flow paths to form different refrigerant circuits, and the throttle valve group is configured to throttle and reduce the pressure of the refrigerant in the refrigerant circuit flowing through it, the control valve group has a first electrical connection port, the throttle valve group has a second electrical connection port, the opening directions of the first electrical connection port and the second electrical connection port are the same.

According to some examples of the present disclosure, the opening direction of the first electrical connection port is the same as the thickness direction of the first flow channel plate.

The following briefly describes a thermal management system according to another example of the present disclosure.

The thermal management system according to the present disclosure includes an integrated module as described in any one of the above examples. Since the thermal management system according to the present disclosure is provided with the integrated module of the above examples, the thermal management system has a compact structure and a higher degree of integration.

The following briefly describes a vehicle according to another example of the present disclosure.

The vehicle according to the present disclosure includes a thermal management system in the above example. Since the vehicle according to the present disclosure is provided with the thermal management system in the above example, the internal structure of the vehicle is compact and the wiring layout is more aesthetically pleasing.

In summary, the integrated module of the present disclosure integrates the heat exchanger, gas-liquid separator, water pump, water replenishment tank, switching valve and other structures into one by designing and setting the first flow channel plate and the second flow channel plate connected to each other, making the integration degree higher. Moreover, the first flow channel plate and the second flow channel plate with internal flow channels and inlet and outlet interfaces simplify the pipeline connections in the thermal management system, reducing the overall layout space of the thermal management system and facilitating the integrated layout and control of the whole vehicle; the first flow channel plate and the second flow channel plate connected to each other distribute the refrigerant side integrated module and the liquid cooling side integrated module on two sides, and the interfaces of the refrigerant side integrated module and the interfaces of the liquid cooling side integrated module are located on two sides of the integrated module, and the two pipelines do not interfere with each other, facilitating the pipeline layout of the whole vehicle, making the layout of the whole vehicle more reasonable and aesthetically pleasing.

The additional aspects and advantages of the present disclosure are partially provided in the following descriptions, some of which will become apparent from the following descriptions or may be learned from practices of the present disclosure.

### BRIEF DESCRIPTION OF THE DRAWINGS

FIG. 1 is a diagram of the overall structure of an integrated module according to an example of the present disclosure.
FIG. 2 is a diagram of the structure of a refrigerant side integrated module according to an example of the present disclosure.
FIG. 3 is a diagram of the structure of a liquid cooling side integrated module according to an example of the present disclosure.
FIG. 4 is a diagram of the structure of a liquid cooling side integrated module according to an example of the present disclosure.
FIG. 5 is a diagram of the working principle of a thermal management system according to an example of the present disclosure.
FIG. 6 is a schematic diagram of a vehicle provided with a thermal management system according to an example of the present disclosure.

Figure symbols:
Vehicle 1000;
Integrated module 1;
First flow channel plate 10; First one-way valve 11a; Second one-way valve 11b; Third one-way valve 11c; First throttle valve 12a; Second throttle valve 12b; Third throttle valve 12c; First solenoid valve 13a; Second solenoid valve 13b; Heat exchange plate interface 14; First heat exchanger interface 15; Second heat exchanger interface 16;
Second flow channel plate 20; First water side interface 21; Second water side interface 22; Third heat exchanger interface 23; Fourth heat exchanger interface 24;
Heat exchanger 30; Gas-liquid separator 40; Switching valve 50; First valve port 51; Second valve port 52; Third valve port 53; Fourth valve port 54; Water pump 60; Water replenishment tank 70; Heat exchange plate 80;
Thermal management system 10000;
Compressor 100; Outdoor condenser 200; Refrigerant storage tank 300; First radiator 400; Motor electronic control radiator 500; In-vehicle condenser 600; In-vehicle evaporator 700.

### DETAILED DESCRIPTION

The examples of the present disclosure are described below in detail. Examples of the examples are shown in the accompanying drawings, and same or similar reference signs in all the accompanying drawings indicate same or similar components or components having same or similar functions. The examples described below with reference to the accompanying drawings are exemplary, are intended to explain the present disclosure and cannot be construed as a limitation on the present disclosure.

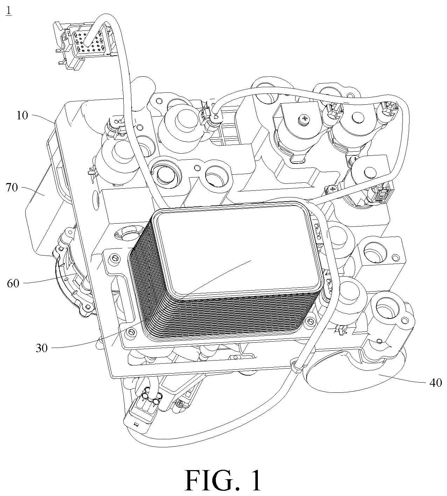

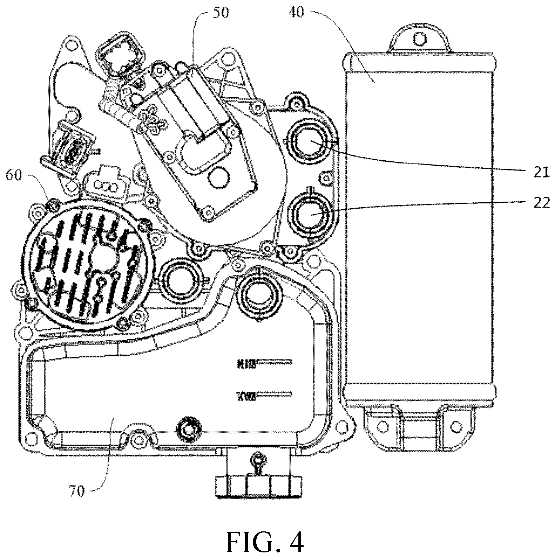

The integrated module 1 according to the examples of the present disclosure is described below with reference to FIG. 1 to FIG. 6.

As shown in FIG. 1, the integrated module 1 according to the present disclosure includes: a first flow channel plate 10, a second flow channel plate 20 and a heat exchanger 30. A plurality of refrigerant flow paths are arranged in the first flow channel plate 10, the first flow channel plate 10 is provided with a first heat exchanger interface 15, a second heat exchanger interface 16 and a plurality of external device interfaces, the first heat exchanger interface 15, the second heat exchanger interface 16 and the external device interfaces are respectively connected to the corresponding refrigerant flow path, and each external device interface is configurable for connecting to a component in a thermal management system 10000 of a vehicle 1000; the second flow channel plate 20 is fixed to the first flow channel plate 10, and internal liquid cooling flow paths are arranged in the second flow channel plate 20, the second flow channel plate 20 is provided with a third heat exchanger interface 23, a fourth heat exchanger interface 24 and a first water side interface 21, the third heat exchanger interface 23, the fourth heat exchanger interface 24 and the first water side interface 21 are respectively connected to the corresponding internal liquid cooling flow path, and the first water side interface 21 is configurable for connecting to an external motor electronic control radiator 500; the heat exchanger 30 is fixed to at least one of the first flow channel plate 10 and the second flow channel plate 20, and the heat exchanger 30 is provided with a first heat exchange flow path and a second heat exchange flow path, which exchange heat with each other, two ends of the first heat exchange flow path are respectively connected to the first heat exchanger interface 15 and the second heat exchanger interface 16, and two ends of the second heat exchange flow path are respectively connected to the third heat exchanger interface 23 and the fourth heat exchanger interface 24.

In some examples, the integrated module 1 can be applied to a thermal management system 10000 of a vehicle 1000. The integrated module 1 integrates and arranges the control components of the thermal management system 10000. By increasing the integration level of the integrated module 1, the space occupied by the thermal management system 10000 in the vehicle can be saved to a greater extent. The integrated module 1 includes a first flow channel plate 10 and a second flow channel plate 20. A plurality of refrigerant flow paths are formed in the first flow channel plate 10 and internal liquid cooling flow paths are formed in the second flow channel plate 20. The first flow channel plate 10 has a plurality of external device interfaces and is connected to various components of the vehicle thermal management system 10000 through the plurality of external device interfaces. The second flow channel plate 20 is fixed to the first flow channel plate 10. The second flow channel plate 20 has a first water side interface 21. The first water side interface 21 is connected to the motor electronic control radiator 500, so that the coolant can pass through the motor electronic control radiator 500 and exchange heat with the motor electronic control radiator 500. The heat exchanger 30 is provided with a first heat exchange flow path and a second heat exchange flow path, which exchange heat with each other. The first heat exchanger interface 15 and the second heat exchanger interface 16 on the first flow channel plate 10, which are connected to the refrigerant flow path, are respectively connected to the two ends of the first heat exchange flow path, and the third heat exchanger interface 23 and the fourth heat exchanger interface 24 on the second flow channel plate 20, which are connected to the internal liquid cooling flow path, are respectively connected to the two ends of the second heat exchange flow path. The heat exchanger 30 can realize heat exchange between the refrigerant flow path and the internal liquid cooling flow path. In some examples, the refrigerant can flow in each refrigerant circuit of the thermal management system 10000 through the refrigerant flow path in the first flow channel plate 10. The first flow channel plate 10 is connected to the structures through which the refrigerant flows, and together with the structures constitutes a refrigerant side integrated module. The second flow channel plate 20 is connected to the structures through which the coolant flows, and together with the structures constitutes a liquid cooling side integrated module.

According to the integrated module 1 of the present disclosure, the structures located on the integrated module 1 are divided into a refrigerant side and a liquid cooling side by setting a first flow channel plate 10 and a second flow channel plate 20 connected to each other. Meanwhile, the refrigerant side integrated module and the liquid cooling side integrated module exchange heat through the heat exchanger 30, which can reduce the overall layout space of the integrated module 1. The integrated module 1 integrates the refrigerant side integrated module and the liquid cooling side integrated module, so that the thermal management system 10000 has a compact structure and a higher degree of integration, which can better realize the platform-based design of the whole vehicle and facilitate the integrated layout and control of the whole vehicle.

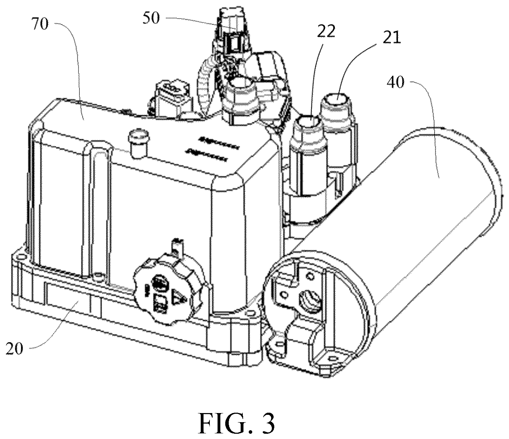

According to some examples of the present disclosure, as shown in FIG. 3 to FIG. 4, the second flow channel plate 20 is provided with a water tank interface connected to the internal liquid cooling flow path, and the integrated module 1 further includes a water replenishment tank 70, the water replenishment tank 70 is fixed to the second flow channel plate 20 and connected to the water tank interface. In some examples, the water replenishment tank 70 is provided on the second flow channel plate 20 and connected to the water tank interface of the second flow channel plate 20, and the water tank interface is connected to the internal liquid cooling flow path, achieving the connection between the water replenishment tank 70 and the internal liquid cooling flow path of the second flow channel plate 20, and improving the integration degree of the integrated module 1. In some examples, the water replenishment tank 70 is connected to the internal liquid cooling flow path to replenish the internal liquid cooling flow path, thereby achieving liquid shortage protection for the liquid cooling side integrated module, and ensuring a cooling effect of the internal liquid cooling flow path on the motor electronic control radiator 500. It can be understood that, the lowest liquid level line of the water replenishment tank 70 should be higher than the height of the heat exchanger 30, so that the coolant in the water replenishment tank 70 can flow into the heat exchanger 30, ensuring heat exchange efficiency.

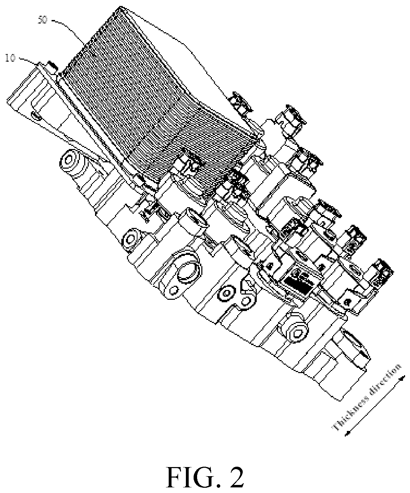

According to some examples of the present disclosure, as shown in FIG. 2, the heat exchanger 30 is located on the side of the first flow channel plate 10 which faces away from the second flow channel plate 20, and the water replenishment tank 70 is located on the side of the second flow channel plate 20 which faces away from the first flow channel plate 10. In some examples, the second flow channel plate 20 is fixed to the first flow channel plate 10, the heat exchanger 30 is located on the side of the first flow channel plate 10 which faces away from the second flow channel plate 20, and the water replenishment tank 70 is located on the side of the second flow channel plate 20 which faces away from the first flow channel plate 10, and the spatial arrangement of the integrated module 1 is optimized, so that the interfaces of the refrigerant side integrated module and the interfaces of the liquid cooling side integrated module can be located on two sides of the integrated module 1, and the two pipelines do not interfere with each other, facilitating the pipeline arrangement of the whole vehicle, making the layout of the whole vehicle more reasonable and aesthetically pleasing.

According to some examples of the present disclosure, as shown in FIG. 3 to FIG. 4, the second flow channel plate 20 is provided with a water pump interface connected to the internal liquid cooling flow path, and the integrated module 1 further includes a water pump 60, the water pump 60 is fixed to the second flow channel plate 20 and connected to the water pump interface. In some examples, the second flow channel plate 20 has a water pump interface, and the water pump 60 is fixed to the second flow channel plate 20 and connected to the water pump interface, which is convenient for arranging the water pump 60 and enabling the water pump 60 to be connected to the liquid cooling flow path. In some examples, the water pump 60 can drive the coolant in the internal liquid cooling flow path to circulate, and the internal liquid cooling flow path can be connected to the corresponding water pump interface to achieve connection with the water pump 60, improving the integration degree of the integrated module 1.

According to some examples of the present disclosure, as shown in FIG. 3 to FIG. 4, the integrated module 1 further includes a switching valve 50. The switching valve 50 is arranged on the second flow channel plate 20, and the switching valve 50 is operated to allow the coolant to flow to the second heat exchange flow path or to prevent the refrigerant from flowing to the second heat exchange flow path. In some examples, the coolant flowing to the second heat exchange flow path can exchange heat with the refrigerant in the first heat exchange flow path, so that the refrigerant cools down the coolant. The switching valve 50 is operated to selectively switch the thermal management system 10000 to an appropriate working mode according to the heat dissipation requirements to meet actual differentiated needs. In some examples, the integrated module 1 further has a coolant circuit. The coolant circuit is configurable for heat exchange with the motor electronic control radiator 500. The motor electronic control radiator 500 can dissipate heat from the motor electronic control module of the vehicle 1000 to ensure that the motor electronic control module has a configurable operating temperature. The second heat exchange flow path is constructed as a part of the coolant circuit. The refrigerant in the first heat exchange flow path can exchange heat with the coolant in the second heat exchange flow path, so that the refrigerant in the first heat exchange flow path can indirectly cool the motor electronic control radiator 500 to ensure that the motor electronic control module has a configurable operating temperature.

According to some examples of the present disclosure, the second flow channel plate 20 is provided with a second water side interface 22, the second water side interface 22 is connected to the internal liquid cooling flow path, and the second water side interface 22 is configurable for connecting to an external first radiator 400. In some examples, the second flow channel plate 20 has a first water side interface 21 and a second water side interface 22, the first water side interface 21 is connected to the motor electronic control radiator 500, so that the coolant can pass through the motor electronic control radiator 500 and exchange heat with the motor electronic control radiator 500, and the second water side interface 22 is connected to the first radiator 400, so that the coolant flows out of the first radiator 400 and exchanges heat with the heat exchanger 30.

According to some examples of the present disclosure, the switching valve 50 is a four-way valve, and the internal liquid cooling flow paths include a first flow channel, a second flow channel, a third flow channel, a fourth flow channel and a fifth flow channel. The first flow channel is connected to the water pump interface and the third heat exchanger interface 23; the second flow channel is respectively connected to the first flow channel and a first valve port 51 of the switching valve 50; the third flow channel is respectively connected to the fourth heat exchanger interface 24 and a second valve port 52 of the switching valve 50; the fourth flow channel is respectively connected to a third valve port 53 of the switching valve 50 and the first water side interface 21; the fifth flow channel is respectively connected to a fourth valve port 54 of the switching valve 50 and the second water side interface 22. In some examples, the first flow channel of the internal liquid cooling flow path communicates the water pump 60 with the heat exchanger 30, and the switching valve 50 has a first valve port 51, a second valve port 52, a third valve port 53 and a fourth valve port 54. The switching valve 50 can selectively control the conduction of the four valve ports to control the flow direction of the coolant.

In some examples, the switching valve 50 is operated to control structures of the liquid cooling side integrated module to switch between multiple working modes. In the first working mode, the coolant can flow through the motor electronic control radiator 500 and the first radiator 400 to form a coolant circuit. At this time, the first radiator 400 can take away the heat of the motor electronic control radiator 500 by the coolant to reduce the temperature of the motor electronic control radiator 500 and ensure the cooling effect on the motor electronic control module; in the second working mode, the coolant flows through the motor electronic control radiator 500 and the second heat exchange flow path to form a coolant circuit. At this time, the coolant flows through the second heat exchange flow path to exchange heat with the refrigerant in the first heat exchange flow path, and the refrigerant recovers residual heat from the coolant in order to reduce the temperature of the coolant, which can also ensure the cooling effect on the motor electronic control module; in the third working mode, the coolant flows through the motor electronic control radiator 500, the second heat exchange flow path and the first radiator 400 to form a coolant circuit. At this time, the first radiator 400 can take away the heat of the motor electronic control radiator 500 by the coolant, and meanwhile, the coolant flows through the second heat exchange flow path to exchange heat with the refrigerant in the first heat exchange flow path to reduce the temperature of the coolant, resulting in double cooling of the motor electronic control radiator 500, and improving the cooling effect on the motor electronic control module. It can be understood that, the first working mode can be a high-temperature heat dissipation mode, the second working mode can be a heat pump working mode below -10°C, and the third working mode can be a heat pump working mode between -10°C and 10°C. By setting the switching valve 50, the thermal management system 10000 can control the flow direction of the coolant according to the heat dissipation demand, so as to switch the thermal management system 10000 to an appropriate working mode to meet actual differentiated needs.

According to some examples of the present disclosure, the first water side interface 21 and the second water side interface 22 extend in the same direction. In some examples, the second flow channel plate 20 is provided with the first water side interface 21 and the second water side interface 22 extending in the same direction, so that the pipelines connected to the water side interfaces can be connected to the same side of the integrated module 1, which is convenient for the pipeline layout of the whole vehicle.

According to some examples of the present disclosure, the first water side interface 21 and the second water side interface 22 are located at the edge of the second flow channel plate 20 and on the side of the switching valve 50 which is away from the water pump 60. In some examples, in order to prevent the water side interfaces of the second flow channel plate 20 from interfering with the arrangement of other pipelines when connected to the corresponding structure, the first water side interface 21 and the second water side interface 22 are arranged at the edge of the second flow channel plate 20. Meanwhile, in order to avoid the pipeline connected to the water pump 60, the first water side interface 21 and the second water side interface 22 are arranged on the side of the switching valve 50 which is away from the water pump 60, so that the pipelines connected to the water side interfaces can be connected to the edge of the integrated module 1, making the pipeline arrangement of the whole vehicle more reasonable and aesthetically pleasing.

According to some examples of the present disclosure, as shown in FIG. 1 to FIG. 4, the external device interfaces include a gas-liquid separation inlet interface; the integrated module 1 further includes a gas-liquid separator 40, the gas-liquid separator 40 is fixed to the first flow channel plate 10, and the inlet end of the gas-liquid separator 40 is connected to the gas-liquid separation inlet interface. In some examples, the plurality of external device interfaces include a gas-liquid separation inlet interface, the gas-liquid separator 40 has an inlet end, the gas-liquid separator 40 is fixed to the first flow channel plate 10, and the inlet end of the gas-liquid separator 40 is connected to the gas-liquid separation inlet interface, so as to arrange the gas-liquid separator 40 and enable the gas-liquid separator 40 to communicate with the refrigerant flow path in the first flow channel plate 10. In the thermal management system 10000, the refrigerant can be converted between gaseous and liquid states to achieve heat absorption and heat release. When the gaseous refrigerant circulates in the refrigerant pipeline in the thermal management system 10000, due to heat exchange with other structures, the gaseous refrigerant carries liquid refrigerant in the refrigerant pipeline. The gas-liquid separator 40 is arranged to separate the liquid refrigerant from the gaseous refrigerant in the gas-liquid mixture of the refrigerant. The gaseous refrigerant can enter the gas-liquid separator 40 from the inlet end of the gas-liquid separator 40. The gas-liquid separator 40 separates the liquid refrigerant from the gaseous refrigerant in the gas-liquid mixture of the refrigerant, and the droplets entrained in the gas are removed. The structure connected to the gas-liquid separator 40 can be connected to the corresponding gas-liquid separation inlet interface to achieve connection with the gas-liquid separator 40, which can improve the integration level of the integrated module 1 and help save the layout space in the vehicle. In some examples, the gas-liquid separator 40 can be fixed to the first flow channel plate 10 by screws. In other examples, the gas-liquid separator 40 has a separator j oint, the separator joint is located at the inlet end and communicated with the inlet end, and the inlet end is connected to other flow channels or pipelines through the separator joint.

According to some examples of the present disclosure, as shown in FIG. 1, the gas-liquid separator 40 and the second flow channel plate 20 are located on the same side of the first flow channel plate 10. In some examples, the gas-liquid separator 40 is connected to the first flow channel plate 10 through a gas-liquid separation inlet interface. To make the overall structure of the integrated module 1 more compact, the gas-liquid separator 40 and the second flow channel plate 20 are arranged on the same side to fully utilize the space of the integrated module 1 and improve the integration degree of the integrated module 1.

According to some examples of the present disclosure, the external device interfaces include at least one group of heat exchange plate interfaces 14, each group of heat exchange plate interfaces 14 is connected to the two ends of the same heat exchange plate 80, and the heat exchange plate 80 is configured to regulate the temperature of a battery module. In some examples, a plurality of external device interfaces include heat exchange plate interfaces 14, and each group of heat exchange plate interfaces 14 is respectively connected to the two ends of the heat exchange plate 80. The vehicle battery module generates heat when working, and the battery needs to be cooled. When the temperature of the battery module is too high, the heat exchange plate 80 can exchange heat with the battery module to cool the battery module. The coolant circulates in the heat exchange plate 80 and exchanges heat with the battery module via contact with the heat exchange plate 80, so that the heat generated by the battery module is taken away by the circulation of the coolant. The heat exchange plate 80 is provided to improve the safety and durability of the battery module, accelerate the cooling speed of the battery module temperature, and achieve heat exchange under high-power charging.

According to some examples of the present disclosure, the openings of a plurality of external device interfaces are oriented in the same direction, so that the pipelines connected to the external device interfaces can be connected to the same side of the integrated module 1, which facilitates the pipeline layout of the whole vehicle.

According to some examples of the present disclosure, the openings of the first water side interface 21 and the second water side interface 22 are oriented in a first direction, and the openings of the plurality of external device interfaces are oriented in a second direction, the first direction and the second direction are opposite. In some examples, the first water side interface 21 and the second water side interface 22 provided on the second flow channel plate 20 open in the first direction, and the plurality of external device interfaces provided on the first flow channel plate 10 open in the second direction, so that the pipelines connected to the first water side interface 21, the second water side interface 22 and the plurality of external device interfaces are respectively located on two sides of the integrated module 1, and the two pipelines do not interfere with each other, facilitating the pipeline layout of the whole vehicle, making the layout of the whole vehicle more reasonable and aesthetically pleasing.

According to some examples of the present disclosure, as shown in FIG. 1, the heat exchanger 30 is arranged at the bottom corner of the first flow channel plate 10 to facilitate the pipeline layout of the heat exchanger 30, and the heat exchanger 30 is arranged at the edge of the first flow channel plate 10 to avoid other structures disposed on the first flow channel plate 10, thereby facilitating the pipeline layout of the entire thermal management system 10000.

According to some examples of the present disclosure, mounting holes are provided on adjacent side walls of the first flow channel plate 10, and the mounting holes are configurable for cooperating with the body of the vehicle 1000 to fix the integrated module 1. In some examples, the vehicle body is provided with mounting positions that cooperate with the mounting holes. The integrated module 1 is integrally fixed to the vehicle body after the mounting holes cooperate with the mounting positions. The mounting holes are provided on adjacent side walls, which can be applied to different vehicle models, thereby improving versatility.

According to some examples of the present disclosure, the first flow channel plate 10 is provided with a control valve group and a throttle valve group, the control valve group is configured to communicate different refrigerant flow paths to form different refrigerant circuits, the throttle valve group is configured to throttle and reduce the pressure of the refrigerant in the refrigerant circuit flowing through it, the control valve group has a first electrical connection port, the throttle valve group has a second electrical connection port, the opening directions of the first electrical connection port and the second electrical connection port are the same. In some examples, the openings of the first electrical connection port and the second electrical connection port are oriented in the same direction, so that the connection of the first electrical connection port or the second electrical connection port can be achieved through the same operation, which is convenient for reducing the complexity of the operation and realizing automated production. Meanwhile, such an arrangement can make the structure of the throttle valve group and the control valve group more compact, so that more throttle valves and control valves can be arranged in the same size of space, or the space occupied by the same number of throttle valves and control valves can be smaller.

According to some examples of the present disclosure, the opening direction of the first electrical connection port is the same as the thickness direction of the first flow channel plate 10. In some examples, in order to make full use of the space of the first flow channel plate 10 and avoid the first electrical connection port from occupying too much space, the control valve group and the throttle valve group are arranged along the length direction and/or width direction of the first flow channel plate 10, and the opening direction of the first electrical connection port is perpendicular to the surface of the first flow channel plate 10, so that when operating the connection between the component and the first electrical connection port, the position of the component can be moved in a direction perpendicular to the surface of the first flow channel plate 10, so as to avoid the control valve group or the throttle valve group on the surface of the first flow channel plate 10 affecting the connection between the component and the first electrical connection port, thereby facilitating the quick and convenient connection of the component to the first electrical connection port or the second electrical connection port, and realizing the integrated setting of the control valve and the throttle valve.

In some examples of the present disclosure, the integrated module 1 includes a first flow channel plate 10 and a second flow channel plate 20. The heat exchanger 30 can be fixed to the first flow channel plate 10 by screws, and a first heat exchange flow path and a second heat exchange flow path that can exchange heat with each other are formed inside the heat exchanger 30. The first flow channel plate 10 is provided with a first heat exchanger interface 15, a second heat exchanger interface 16, and a plurality of external device interfaces. The first heat exchanger interface 15 and the second heat exchanger interface 16 are respectively connected to the two ends of the first heat exchange flow path of the heat exchanger 30 to connect the first heat exchange flow path with the refrigerant flow path of the first flow channel plate 10; the second flow channel plate 20 is provided with a third heat exchanger interface 23, a fourth heat exchanger interface 24, a first water side interface 21 and a second water side interface 22. The third heat exchanger interface 23 and the fourth heat exchanger interface 24 are respectively connected to the two ends of the second heat exchange flow path of the heat exchanger 30 to connect the second heat exchange flow path with the internal liquid cooling flow path of the second flow channel plate 20. A plurality of external device interfaces are respectively connected to structures such as the gas-liquid separator 40 and the heat exchange plate 80. In some examples, the external device interfaces include a gas-liquid separation inlet interface. The gas-liquid separator 40 and the second flow channel plate 20 are arranged on the same side of the first flow channel plate 10 and the inlet end of the gas-liquid separator 40 is connected to the gas-liquid separation inlet interface. The external device interfaces further include a group of heat exchange plate interfaces 14 and the heat exchange plate interfaces 14 are connected to two ends of the same heat exchange plate 80. A water replenishment tank 70 and a water pump 60 are arranged on the second flow channel plate 20. The water replenishment tank 70 is communicated with the water tank interface arranged on the second flow channel plate 20, and the water pump 60 is communicated with the water pump interface arranged on the second flow channel plate 20. A switching valve 50 is also provided on the second flow channel plate 20. The switching valve 50 is constructed as a four-way valve. The four-way valve has a first valve port 51, a second valve port 52, a third valve port 53 and a fourth valve port 54. The second valve port 52 is connected to the fourth heat exchanger interface 24 on the second flow channel plate 20, the third valve port 53 is connected to the first water side interface 21, and the fourth valve port 54 is connected to the second water side interface 22. The water replenishment tank 70 is located above the four-way valve and the water pump 60.

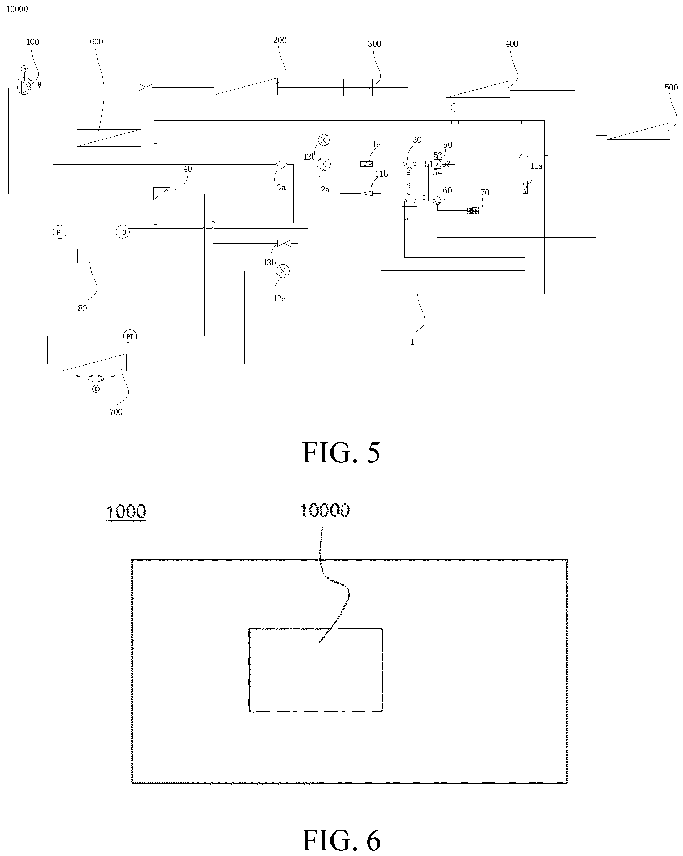

As shown in FIG. 5, the thermal management system 10000 further includes a compressor 100, an in-vehicle condenser 600, an in-vehicle evaporator 700, an outdoor condenser 200, a refrigerant storage tank 300, a heat exchange plate 80, a motor electronic control radiator 500, a first radiator 400, a throttle valve group, a control valve group and other structures. The compressor 100, the in-vehicle condenser 600, the in-vehicle evaporator 700, the outdoor condenser 200, the refrigerant storage tank 300, the heat exchange plate 80 and other structures are connected to the refrigerant side of the integrated module 1. The motor electronic control radiator 500, the first radiator 400 and other structures are connected to the liquid cooling side of the integrated module 1. The refrigerant in the refrigerant circuit can be converted between gaseous and liquid states under the action of the compressor 100. The thermal management system 10000 has multiple modes, such as battery cooling mode, battery heating mode, air conditioning cooling mode, air conditioning heating mode, battery cooling + air conditioning cooling mode, battery heating + air conditioning cooling mode, battery cooling + air conditioning heating mode, battery heating + air conditioning heating mode, air conditioning cooling + air conditioning heating mode, battery heating + air conditioning cooling + air conditioning heating mode, battery cooling + air conditioning cooling + air conditioning heating mode, etc.

In the battery cooling mode, the compressor 100 discharges high-temperature and high-pressure gaseous refrigerant. The gaseous refrigerant enters the outdoor condenser 200 and releases heat and liquefies in the outdoor condenser 200. The medium-temperature and high-pressure liquid refrigerant flows to the first throttle valve 12a through the first one-way valve 11a and the second one-way valve 11b in turn. The liquid refrigerant is throttled and expanded in the first throttle valve 12a and flows out of the integrated module 1 through the heat exchange plate interface 14 and then enters the heat exchange plate 80. At this time, the low-temperature and low-pressure gas-liquid mixture absorbs the heat of the battery and evaporates, which can achieve the cooling of the battery module when the battery module temperature is too high. After heat exchange, the refrigerant enters the integrated module 1 again through the heat exchange plate interface 14, flows through the first solenoid valve 13a, and then the refrigerant enters the gas-liquid separator 40. After gas-liquid separation, the refrigerant enters the compressor 100 again. The above is the battery cooling mode of the thermal management system 10000. The refrigerant circulates in the above process to achieve the cooling of the battery module.

In the battery heating mode, the compressor 100 discharges high-temperature and high-pressure gaseous refrigerant. The gaseous refrigerant flows into the integrated module 1 and flows to the first solenoid valve 13a. The gaseous refrigerant flows into the heat exchange plate 80 through the heat exchange plate interface 14. At this time, the gaseous refrigerant condenses and releases heat and heats the battery module, thereby heating the battery module, improving the battery lifespan and battery efficiency, and also improving the battery capacity and vehicle cruising range at low temperatures, effectively shortening the charging time. After heat exchange, the refrigerant enters the integrated module 1 through the heat exchange plate interface 14, and is throttled and expanded in the first throttle valve 12a. The liquid refrigerant flows to the first heat exchanger interface 15 through the third one-way valve 11c and enters the heat exchanger 30 to absorb heat and evaporate. The refrigerant flowing out of the heat exchanger 30 from the second heat exchanger interface 16 flows to the gas-liquid separator 40 through the second solenoid valve 13b. After gas-liquid separation, the refrigerant enters the compressor 100 again. The above is the battery heating mode of the thermal management system 10000. The refrigerant circulates in the above process to heat the battery module.

In the air conditioning cooling mode, the compressor 100 discharges high-temperature and high-pressure gaseous refrigerant. The gaseous refrigerant enters the outdoor condenser 200. After releasing heat and liquefying in the outdoor condenser 200, the refrigerant becomes liquid refrigerant with medium temperature and high pressure. The liquid refrigerant flows through the first one-way valve 11a to the third throttle valve 12c for throttling and expansion. The low-temperature and low-pressure gas-liquid mixture enters the in-vehicle evaporator 700 to absorb heat and evaporate. The refrigerant absorbs heat from the interior environment of the vehicle, reducing the temperature inside the vehicle. The low-temperature and low-pressure gaseous refrigerant enters the integrated module 1 again and enters the gas-liquid separator 40. After gas-liquid separation, the refrigerant enters the compressor 100 again. The above is the air conditioning cooling mode of the thermal management system 10000. The refrigerant circulates in the above process to achieve refrigerating and cooling of the vehicle passenger compartment.

In the air conditioning heating mode, the compressor 100 discharges high-temperature and high-pressure gaseous refrigerant. The gaseous refrigerant enters the in-vehicle condenser 600. The refrigerant releases heat in the in-vehicle condenser 600 and the heat is mixed with the air and blown into the vehicle by the blower to heat the vehicle passenger compartment. The refrigerant flowing out of the in-vehicle condenser 600 enters the integrated module 1 and is throttled and expanded in the second throttle valve 12b, and then enters the heat exchanger 30 through the first heat exchanger interface 15 for heat exchange. After heat exchange, the refrigerant enters the second solenoid valve 13b through the second one-way valve 11b and then enters the gas-liquid separator 40. After gas-liquid separation, the refrigerant enters the compressor 100 again. The above is the air conditioning heating mode of the thermal management system 10000. The refrigerant circulates in the above process to achieve heating and warming of the vehicle passenger compartment.

In the battery cooling + air conditioning cooling mode, the compressor 100 discharges high-temperature and high-pressure gaseous refrigerant, and the gaseous refrigerant is divided into two paths. One path enters the outdoor condenser 200, and the gaseous refrigerant enters the outdoor condenser 200 and releases heat and liquefies in the outdoor condenser 200, and the medium-temperature and high-pressure liquid refrigerant flows to the first throttle valve 12a through the first one-way valve 11a and the second one-way valve 11b in turn. The liquid refrigerant is throttled and expanded in the first throttle valve 12a and flows out of the integrated module 1 through the heat exchange plate interface 14 and then enters the heat exchange plate 80. At this time, the low-temperature and low-pressure gas-liquid mixture absorbs the heat of the battery and evaporates. After heat exchange, the refrigerant enters the integrated module 1 again through the heat exchange plate interface 14, and flows through the first solenoid valve 13a, and then the refrigerant enters the gas-liquid separator 40. The other path enters the outdoor condenser 200. The gaseous refrigerant enters the outdoor condenser 200. After releasing heat and liquefying in the outdoor condenser 200, the refrigerant becomes liquid refrigerant with medium temperature and high pressure. The liquid refrigerant flows through the first one-way valve 11a to the third throttle valve 12c for throttling and expansion. The low-temperature and low-pressure gas-liquid mixture enters the in-vehicle evaporator 700 to absorb heat and evaporate. The refrigerant absorbs heat from the interior environment of the vehicle, reducing the temperature inside the vehicle. The low-temperature and low-pressure gaseous refrigerant enters the integrated module 1 again and enters the gas-liquid separator 40. The refrigerant from the two paths is separated into gas and liquid in the gas-liquid separator 40. After gas-liquid separation, the refrigerant enters the compressor 100 again. The above is the battery cooling + air conditioning cooling mode of the thermal management system 10000.

In the battery heating + air conditioning cooling mode, the compressor 100 discharges high-temperature and high-pressure gaseous refrigerant, and the gaseous refrigerant is divided into two paths. One path enters the integrated module 1 and flows into the heat exchange plate 80 through the first solenoid valve 13a. At this time, the gaseous refrigerant condenses and releases heat and heats the battery module. After heat exchange, the refrigerant enters the integrated module 1 through the heat exchange plate interface 14 and is throttled and expanded in the first throttle valve 12a. The liquid refrigerant flows to the first heat exchanger interface 15 through the third one-way valve 11c and enters the heat exchanger 30 to absorb heat and evaporate. The refrigerant flowing out of the heat exchanger 30 from the second heat exchanger interface 16 flows to the gas-liquid separator 40 through the second solenoid valve 13b. The other path enters the outdoor condenser 200. After releasing heat and liquefying in the outdoor condenser 200, the refrigerant becomes liquid refrigerant with medium temperature and high pressure. The liquid refrigerant flows through the first one-way valve 11a to the third throttle valve 12c for throttling and expansion. The low-temperature and low-pressure gas-liquid mixture enters the in-vehicle evaporator 700 to absorb heat and evaporate. The refrigerant absorbs heat from the interior environment of the vehicle, reducing the temperature inside the vehicle. The low-temperature and low-pressure gaseous refrigerant enters the integrated module 1 again and enters the gas-liquid separator 40. The refrigerant from the two paths is separated into gas and liquid in the gas-liquid separator 40. After gas-liquid separation, the refrigerant enters the compressor 100 again. The above is the battery heating + air conditioning cooling mode of the thermal management system 10000.

In the battery cooling + air conditioning heating mode, the compressor 100 discharges high-temperature and high-pressure gaseous refrigerant, and the gaseous refrigerant is divided into two paths. One path enters the outdoor condenser 200, and the gaseous refrigerant enters the outdoor condenser 200 and releases heat and liquefies in the outdoor condenser 200. The medium-temperature and high-pressure liquid refrigerant flows to the first throttle valve 12a through the first one-way valve 11a and the second one-way valve 11b in turn. The liquid refrigerant is throttled and expanded in the first throttle valve 12a and flows out of the integrated module 1 through the heat exchange plate interface 14 and then enters the heat exchange plate 80. At this time, the low-temperature and low-pressure gas-liquid mixture absorbs the heat of the battery and evaporates, which can achieve cooling of the battery module when the temperature of the battery module is too high. After heat exchange, the refrigerant enters the integrated module 1 again through the heat exchange plate interface 14. After flowing through the first solenoid valve 13a, the refrigerant enters the gas-liquid separator 40. The other path enters the outdoor condenser 200. The refrigerant releases heat in the in-vehicle condenser 600 and the heat is mixed with the air and blown into the vehicle by the blower to heat the vehicle passenger compartment. The refrigerant flowing out of the in-vehicle condenser 600 enters the integrated module 1 and is throttled and expanded in the second throttle valve 12b, and then enters the heat exchanger 30 through the first heat exchanger interface 15 for heat exchange. After heat exchange, the refrigerant enters the second solenoid valve 13b through the second one-way valve 11b and then enters the gas-liquid separator 40. The refrigerant from the two paths is separated into gas and liquid in the gas-liquid separator 40. After gas-liquid separation, the refrigerant enters the compressor 100 again. The above is the battery cooling + air conditioning heating mode of the thermal management system 10000.

In the battery heating + air conditioning heating mode, the compressor 100 discharges high-temperature and high-pressure gaseous refrigerant, and the gaseous refrigerant is divided into two paths. One path enters the integrated module 1 and flows into the heat exchange plate 80 through the first solenoid valve 13a. At this time, the gaseous refrigerant condenses and releases heat and heats the battery module. After heat exchange, the refrigerant enters the integrated module 1 through the heat exchange plate interface 14 and is throttled and expanded in the first throttle valve 12a. The liquid refrigerant flows to the first heat exchanger interface 15 through the third one-way valve 11c and enters the heat exchanger 30 to absorb heat and evaporate. The refrigerant flowing out of the heat exchanger 30 from the second heat exchanger interface 16 flows to the gas-liquid separator 40 through the second solenoid valve 13b. The other path enters the outdoor condenser 200. The refrigerant releases heat in the in-vehicle condenser 600, the heat is mixed with the air and blown into the vehicle by the blower to heat the vehicle passenger compartment. The refrigerant flowing out of the in-vehicle condenser 600 enters the integrated module 1 and is throttled and expanded in the second throttle valve 12b, and then enters the heat exchanger 30 through the first heat exchanger interface 15 for heat exchange. After heat exchange, the refrigerant enters the second solenoid valve 13b through the second one-way valve 11b and then enters the gas-liquid separator 40. The refrigerant from the two paths is separated into gas and liquid in the gas-liquid separator 40. After gas-liquid separation, the refrigerant enters the compressor 100 again. The above is the battery heating + air conditioning heating mode of the thermal management system 10000.

In the air conditioning cooling + air conditioning heating mode, the compressor 100 discharges high-temperature and high-pressure gaseous refrigerant, and the gaseous refrigerant is divided into two paths. One path enters the outdoor condenser 200. After releasing heat and liquefying in the outdoor condenser 200, the refrigerant becomes liquid refrigerant with medium temperature and high pressure. The liquid refrigerant flows through the first one-way valve 11a to the third throttle valve 12c for throttling and expansion. The low-temperature and low-pressure gas-liquid mixture enters the in-vehicle evaporator 700 to absorb heat and evaporate. The refrigerant absorbs heat from the interior environment of the vehicle, reducing the temperature inside the vehicle. The low-temperature and low-pressure gaseous refrigerant enters the integrated module 1 again and enters the gas-liquid separator 40. The other path enters the outdoor condenser 200. The refrigerant releases heat in the in-vehicle condenser 600 and the heat is mixed with the air and blown into the vehicle by the blower to heat the vehicle passenger compartment. The refrigerant flowing out of the in-vehicle condenser 600 enters the integrated module 1 and is throttled and expanded in the second throttle valve 12b, and then enters the heat exchanger 30 through the first heat exchanger interface 15 for heat exchange. After heat exchange, the refrigerant enters the second solenoid valve 13b through the second one-way valve 11b and then enters the gas-liquid separator 40. The refrigerant from the two paths is separated into gas and liquid in the gas-liquid separator 40. After gas-liquid separation, the refrigerant enters the compressor 100 again. The above is the air conditioning cooling + air conditioning heating mode of the thermal management system 10000.

In the battery heating + air conditioning cooling + air conditioning heating mode, the compressor 100 discharges high-temperature and high-pressure gaseous refrigerant, and the gaseous refrigerant is divided into three paths. The first path enters the outdoor condenser 200. After releasing heat and liquefying in the outdoor condenser 200, the refrigerant becomes liquid refrigerant with medium temperature and high pressure. The liquid refrigerant flows through the first one-way valve 11a to the third throttle valve 12c for throttling and expansion. The low-temperature and low-pressure gas-liquid mixture enters the in-vehicle evaporator 700 to absorb heat and evaporate. The refrigerant absorbs heat from the interior environment of the vehicle, reducing the temperature inside the vehicle. The low-temperature and low-pressure gaseous refrigerant enters the integrated module 1 again and enters the gas-liquid separator 40. The second path enters the outdoor condenser 200. The refrigerant releases heat in the in-vehicle condenser 600 and the heat is mixed with the air and blown into the vehicle by the blower to heat the vehicle passenger compartment. The refrigerant flowing out of the in-vehicle condenser 600 enters the integrated module 1 and is throttled and expanded in the second throttle valve 12b, and then enters the heat exchanger 30 through the first heat exchanger interface 15 for heat exchange. After heat exchange, the refrigerant enters the second solenoid valve 13b through the second one-way valve 11b and then enters the gas-liquid separator 40. The third path enters the integrated module 1 and flows into the heat exchange plate 80 through the first solenoid valve 13a. After heat exchange, the refrigerant enters the integrated module 1 through the heat exchange plate interface 14 and is throttled and expanded in the first throttle valve 12a. The liquid refrigerant flows to the first heat exchanger interface 15 through the third one-way valve 11c and enters the heat exchanger 30 to absorb heat and evaporate. The refrigerant flowing out of the heat exchanger 30 from the second heat exchanger interface 16 flows to the gas-liquid separator 40 through the second solenoid valve 13b. The refrigerant from the three paths is separated into gas and liquid in the gas-liquid separator 40. After gas-liquid separation, the refrigerant enters the compressor 100 again. The above is the battery heating + air conditioning cooling + air conditioning heating mode of the thermal management system 10000.

In the battery cooling + air conditioning cooling + air conditioning heating mode, the compressor 100 discharges high-temperature and high-pressure gaseous refrigerant, and the gaseous refrigerant is divided into three paths. The first path enters the outdoor condenser 200. After releasing heat and liquefying in the outdoor condenser 200, the refrigerant becomes liquid refrigerant with medium temperature and high pressure. The liquid refrigerant flows through the first one-way valve 11a to the third throttle valve 12c for throttling and expansion. The low-temperature and low-pressure gas-liquid mixture enters the in-vehicle evaporator 700 to absorb heat and evaporate. The refrigerant absorbs heat from the interior environment of the vehicle, reducing the temperature inside the vehicle. The low-temperature and low-pressure gaseous refrigerant enters the integrated module 1 again and enters the gas-liquid separator 40. The second path enters the outdoor condenser 200. The refrigerant releases heat in the in-vehicle condenser 600 and the heat is mixed with the air and blown into the vehicle by the blower to heat the vehicle passenger compartment. The refrigerant flowing out of the in-vehicle condenser 600 enters the integrated module 1 and is throttled and expanded in the second throttle valve 12b, and then enters the heat exchanger 30 through the first heat exchanger interface 15 for heat exchange. After heat exchange, the refrigerant enters the second solenoid valve 13b through the second one-way valve 11b and then enters the gas-liquid separator 40. The third path enters the outdoor condenser 200. The gaseous refrigerant enters the outdoor condenser 200 and releases heat and liquefies in the outdoor condenser 200. The medium-temperature and high-pressure liquid refrigerant flows to the first throttle valve 12a through the first one-way valve 11a and the second one-way valve 11b in turn. The liquid refrigerant is throttled and expanded in the first throttle valve 12a and flows out of the integrated module 1 through the heat exchange plate interface 14 and then enters the heat exchange plate 80. At this time, the low-temperature and low-pressure gas-liquid mixture absorbs the heat of the battery and evaporates, which can achieve cooling of the battery module when the temperature of the battery module is too high. After heat exchange, the refrigerant enters the integrated module 1 again through the heat exchange plate interface 14. After flowing through the first solenoid valve 13a, the refrigerant enters the gas-liquid separator 40. The refrigerant from the three paths is separated into gas and liquid in the gas-liquid separator 40. After gas-liquid separation, the refrigerant enters the compressor 100 again. The above is the battery cooling + air conditioning cooling + air conditioning heating mode of the thermal management system 10000.

The liquid cooling side integrated module can realize four working modes. For example, in a high-temperature heat dissipation mode, the first valve port 51 and the third valve port 53 of the four-way valve are connected. The coolant of the first radiator 400 enters the water pump 60 and flows to the four-way valve through the second flow channel. The four-way valve guides the coolant to the motor electronic control radiator 500. The coolant enters the motor electronic control radiator 500 for heat exchange and then returns to the first radiator 400, realizing the circulation operation of the high-temperature heat dissipation mode.

The liquid cooling side integrated module also has a heat pump working mode below -10°C. At this time, the second valve port 52 and the fourth valve port 54 of the four-way valve are connected, and the coolant of the first radiator 400 enters the water pump 60, and then enters the heat exchanger 30 through the first flow channel. After exchanging heat with the refrigerant in the heat exchanger 30, it flows to the four-way valve through the third flow channel, and the coolant flows into the first radiator 400, realizing the circulation operation of the heat pump working mode below -10°C.

The liquid cooling side integrated module also has a heat pump working mode between -10°C and 10°C. At this time, the second valve port 52 and the third valve port 53 of the four-way valve are connected, and the coolant of the first radiator 400 enters the water pump 60, and then enters the heat exchanger 30 through the first flow channel. After exchanging heat with the refrigerant in the heat exchanger 30, it enters the four-way valve through the third flow channel. The coolant flows into the motor electronic control radiator 500 for heat exchange and then returns to the first radiator 400, realizing the circulation operation of the heat pump working mode between -10C and 10°C.

The liquid cooling side integrated module also has a heat absorption and heat dissipation working mode. At this time, the second valve port 52 of the four-way valve is connected to the third valve port 53 and the fourth valve port 54 respectively. The coolant of the first radiator 400 enters the water pump 60, and then enters the heat exchanger 30 through the first flow channel. After exchanging heat with the refrigerant in the heat exchanger 30, it flows to the four-way valve. The four-way valve guides the coolant to the motor electronic control radiator 500 and the first radiator 400 respectively, realizing the circulation operation of the heat absorption and heat dissipation working mode.

The integrated module 1 of the present disclosure divides the structures located on the integrated module 1 into a refrigerant side and a liquid cooling side by setting a first flow channel plate 10 and a second flow channel plate 20 connected to each other, and sets structures such as the heat exchanger 30 and the gas-liquid separator 40 on the refrigerant side integrated module, and sets structures such as the switching valve 50, the water pump 60, and the water replenishment tank 70 on the liquid cooling side integrated module. The gas-liquid separator 40 is arranged on the same side as the liquid cooling side integrated module, so that the interfaces of the refrigerant side integrated module and the interfaces of the liquid cooling side integrated module are located on two sides of the integrated module, and the two pipelines do not interfere with each other, facilitating the pipeline layout of the whole vehicle, making the layout of the whole vehicle more reasonable and aesthetically pleasing. In this way, the thermal management system 10000 has a compact structure and a higher degree of integration, which can better realize the platform-based design of the whole vehicle. The integrated module 1 forms a square structure as a whole, which is configurable for small-sized vehicles.

The thermal management system 10000 according to the present disclosure is briefly described below.

As shown in FIG. 5, the thermal management system 10000 according to the present disclosure includes the integrated module 1 described in any one of the above examples. Since the thermal management system 10000 according to the present disclosure is provided with the integrated module 1 of the above examples, the thermal management system 10000 has a compact structure and a higher degree of integration.

The vehicle 1000 according to the present disclosure is briefly described below.

As shown in FIG. 6, the vehicle 1000 according to the present disclosure includes the thermal management system 10000 in the above example. Since the vehicle 1000 according to the present disclosure is provided with the thermal management system 10000 in the above example, the internal structure of the vehicle 1000 is compact and the wiring layout is more aesthetically pleasing.

In summary, the integrated module 1 of the present disclosure integrates structures such as the heat exchanger 30, the gas-liquid separator 40, the water pump 60, the water replenishment tank 70, and the switching valve 50 into one by designing and setting the first flow channel plate 10 and the second flow channel plate 20 connected to each other, making the integration degree higher. Moreover, the first flow channel plate 10 and the second flow channel plate 20 with internal flow channels and inlet and outlet interfaces simplify the pipeline connections in the thermal management system 10000, reducing the overall layout space of the thermal management system 10000 and facilitating the integrated layout and control of the whole vehicle. The first flow channel plate 10 and the second flow channel plate 20 connected to each other distribute the refrigerant side integrated module and the liquid cooling side integrated module on two sides, and the interfaces of the refrigerant side integrated module and the interfaces of the liquid cooling side integrated module are located on two sides of the integrated module 1, and the two pipelines do not interfere with each other, facilitating the pipeline layout of the whole vehicle, making the layout of the whole vehicle more reasonable and aesthetically pleasing.

In description of this specification, description of reference terms "an example", "some embodiments", "illustrative examples", "examples", "specific examples", or "some examples" and the like means that specific features, structures, materials or characteristics described in combination with the embodiment(s) or example(s) are included in at least one embodiment or example of the present disclosure. In this specification, exemplary descriptions of the foregoing terms do not necessarily refer to the same embodiment or example. In addition, the described specific features, structures, materials, or characteristics may be combined in a proper manner in any one or more of the embodiments or examples.

Although the examples of the present disclosure have been shown and described, a person of ordinary skill in the art should understand that various changes, modifications, replacements and variations may be made to the examples without departing from the principles and purposes of the present disclosure. The scope of the disclosure is defined by the claims and their equivalents.

## Claims

1. An integrated module (1), used for a thermal management system (10000) of a vehicle (1000), comprising:
a first flow channel plate (10), a plurality of refrigerant flow paths being arranged in the first flow channel plate (10), the first flow channel plate (10) being provided with a first heat exchanger interface (15), a second heat exchanger interface (16) and a plurality of external device interfaces,
the first heat exchanger interface (15), the second heat exchanger interface (16) and the external device interfaces being respectively connected to the corresponding refrigerant flow paths, and
each of the external device interfaces being configurable for connecting to a component of the thermal management system (10000);
a second flow channel plate (20), the second flow channel plate (20) being fixed to the first flow channel plate (10), and internal liquid cooling flow paths being arranged in the second flow channel plate (20), and the second flow channel plate (20) being provided with a third heat exchanger interface (23), a fourth heat exchanger interface (24) and a first water side interface (21), the third heat exchanger interface (23), the fourth heat exchanger interface (24) and the first water side interface (21) being respectively connected to the corresponding internal liquid cooling flow paths,
and the first water side interface (21) being configurable for connecting to an external motor electronic control radiator (500);
a heat exchanger (30), the heat exchanger (30) being fixed to at least one of the first flow channel plate (10) and the second flow channel plate (20), the heat exchanger (30) being provided with a first heat exchange flow path and a second heat exchange flow path, which exchange heat with each other, two ends of the first heat exchange flow path being respectively connected to the first heat exchanger interface (15) and the second heat exchanger interface (16), and two ends of the second heat exchange flow path being respectively connected to the third heat exchanger interface (23) and the fourth heat exchanger interface (24).

2. The integrated module (1) according to claim 1, wherein the second flow channel plate (20) is provided with a water tank interface connected to the internal liquid cooling flow path, and the integrated module (1) further comprising a water replenishment tank (70), the water replenishment tank (70) being fixed to the second flow channel plate (20) and connected to the water tank interface.

3. The integrated module (1) according to claim 2, wherein the heat exchanger (30) is located on the side of the first flow channel plate (10) which faces away from the second flow channel plate (20), and the water replenishment tank (70) is located on the side of the second flow channel plate (20) which faces away from the first flow channel plate (10).

4. The integrated module (1) according to any one of claims 1 to 3, wherein the second flow channel plate (20) is provided with a water pump interface connected to the internal liquid cooling flow path, and the integrated module (1) further comprising a water pump (60), the water pump (60) being fixed to the second flow channel plate (20) and connected to the water pump interface.

5. The integrated module (1) according to any one of claims 1 to 4, wherein further comprising:
a switching valve (50), the switching valve (50) being arranged on the second flow channel plate (20), and the switching valve (50) being operated to allow the coolant to flow to the second heat exchange flow path or prevent the refrigerant from flowing to the second heat exchange flow path.

6. The integrated module (1) according to any one of claims 1 to 5, wherein the second flow channel plate (20) is provided with a second water side interface (22), the second water side interface (22) being connected to the internal liquid cooling flow path, and the second water side interface (22) being configurable for connecting to an external first radiator (400).

7. The integrated module (1) according to claim 5 or 6, wherein the switching valve (50) is a four-way valve, the internal liquid cooling flow paths comprising:
a first flow channel, the first flow channel being connected to the water pump interface and the third heat exchanger interface (23);
a second flow channel, the second flow channel being respectively connected to the first flow channel and a first valve port (51) of the switching valve (50);
a third flow channel, the third flow channel being respectively connected to the fourth heat exchanger interface (24) and a second valve port (52) of the switching valve (50);
a fourth flow channel, the fourth flow channel being respectively connected to a third valve port (53) of the switching valve (50) and the first water side interface (21);
a fifth flow channel, the fifth flow channel being respectively connected to a fourth valve port (54) of the switching valve (50) and the second water side interface (22).

8. The integrated module (1) according to any one of claims 1 to 7, wherein the first water side interface (21) and the second water side interface (22) extend in the same direction.

9. The integrated module (1) according to any one of claims 5 to 8, wherein the first water side interface (21) and the second water side interface (22) are located at the edge of the second flow channel plate (20) and on the side of the switching valve (50) which is away from the water pump (60).

10. The integrated module (1) according to any one of claims 1 to 9, wherein the external device interfaces comprise a gas-liquid separation inlet interface;
the integrated module (1) further comprising a gas-liquid separator (40), the gas-liquid separator (40) being fixed to the first flow channel plate (10), and the inlet end of the gas-liquid separator (40) being connected to the gas-liquid separation inlet interface.

11. The integrated module (1) according to claim 10, wherein the gas-liquid separator (40) and the second flow channel plate (20) are located on the same side of the first flow channel plate (10).

12. The integrated module (1) according to any one of claims 1 to 11, wherein the external device interfaces comprise at least one group of heat exchange plate interfaces (14), each group of the heat exchange plate interfaces (14) being connected to the two ends of the same heat exchange plate (80), and the heat exchange plate (80) being configured to regulate the temperature of a battery module.

13. The integrated module (1) according to any one of claims 1 to 6, wherein the openings of the plurality of external device interfaces are oriented in the same direction.

14. The integrated module (1) according to claim 13, wherein the openings of the first water side interface (21) and the second water side interface (22) are oriented in a first direction, and the openings of the plurality of external device interfaces are oriented in a second direction, the first direction and the second direction are opposite.

15. The integrated module (1) according to any one of claims 1 to 14, wherein the heat exchanger (30) is arranged at the bottom corner of the first flow channel plate (10).

16. The integrated module (1) according to any one of claims 1 to 15, wherein mounting holes are provided on adjacent side walls of the first flow channel plate (10), and the mounting holes are configurable for cooperating with the body of the vehicle (1000) to fix the integrated module (1).

17. The integrated module (1) according to any one of claims 1 to 16, wherein the first flow channel plate (10) is provided with a control valve group and a throttle valve group, the control valve group being configured to communicate different refrigerant flow paths to form different refrigerant circuits, and the throttle valve group being configured to throttle and reduce the pressure of the refrigerant in the refrigerant circuit flowing through it, the control valve group having a first electrical connection port, and the throttle valve group having a second electrical connection port, the opening directions of the first electrical connection port and the second electrical connection port being the same.

18. The integrated module (1) according to claim 17, wherein the opening direction of the first electrical connection port is the same as the thickness direction of the first flow channel plate (10).

19. A thermal management system (10000) for a vehicle (1000), wherein comprising the integrated module (1) according to any one of claims 1 to 18.

20. A vehicle (1000), wherein comprising the thermal management system (10000) according to claim 19.
